Europäisches Patentamt

(19) European Patent Office

Office européen des brevets

(11) Numéro de publication: **0 065 459**
**B1**

(12) **FASCICULE DE BREVET EUROPEEN**

(45) Date de publication du fascicule du brevet:
31.10.84

(51) Int. Cl.³: **C 10 J 3/50**

(21) Numéro de dépôt: **82400844.5**

(22) Date de dépôt: **07.05.82**

(54) Procédé et dispositif d'alimentation d'un générateur de gaz.

(30) Priorité: **08.05.81 FR 8109243**

(43) Date de publication de la demande:
**24.11.82 Bulletin 82/47**

(45) Mention de la délivrance du brevet:
**31.10.84 Bulletin 84/44**

(84) Etats contractants désignés:
**AT BE CH DE FR GB IT LI LU NL SE**

(56) Documents cités:
**DE - A - 2 256 409**
**DE - C - 349 523**
**FR - A - 2 380 204**
**FR - A - 2 390 495**
**GB - A - 2 029 355**

(73) Titulaire: **CREUSOT-LOIRE, 42 rue d'Anjou,
F-75008 Paris (FR)**

(72) Inventeur: **Kissel, Roland, 12 rue Albert 1er, F-78110 Le
Vésinet (FR)**
Inventeur: **Berger, Pierre, 5 rue A. Merrheim,
F-42100 Saint-Etienne (FR)**
Inventeur: **Chrysostome, Gérard, 168 résidence du Lac
-Torcy, F-71210 Montchanin (FR)**

(74) Mandataire: **Le Brusque, Maurice et al,
CREUSOT-LOIRE 15 rue Pasquier, F-75383 Paris
Cedex 08 (FR)**

## Description

L'invention a pour objet un procédé et un dispositif d'alimentation d'un générateur de gaz constitué d'une enceinte sous pression dans laquelle on injecte un combustible carboné solide sous forme pulvérisée, un fluide modérateur et un fluide contenant par exemple de l'oxygène.

Les générateurs produisant du gaz à partir de combustibles carbonés solides comme du charbon pulvérisé doivent normalement être mis sous une pression de l'ordre de 10 à 80 bars pour avoir une efficacité correcte. Le combustible préablement broyé jusqu'à une granulométrie assez fine, de l'ordre de 0,5 mm est injecté dans l'enceinte qui reçoit par ailleurs une injection d'oxygène l'ensemble constituant un réacteur de gazéification.

Par ailleurs, dans ce genre de procédé, la gazéification du combustible risque de conduire à des températures trop élevées et c'est pourquoi, habituellement, on injecte avec le combustible un fluide modérateur servant à dissiper la quantité de chaleur excédentaire.

L'introduction d'une matière solide pulvérisée dans une enceinte sous pression est évidemment difficile.

On a proposé à cet effet d'utiliser une presse de briquetage comprenant un piston qui comprime le combustible solide dans un conduit débouchant dans le réacteur. Dans ce cas, l'alimentation en combustible se fait de façon discontinue, ce qui peut présenter un inconvénient pour le réglage du fonctionnement du générateur. Dans un procédé connu auquel s'applique notamment l'invention, le charbon pulvérisé est mis en suspension dans un liquide. On obtient ainsi un mélange pompable permettant d'utiliser pour l'alimentation du générateur des pompes à boue de type connu. Cependant, ces pompes ne fonctionnent que pour des suspensions pateuses contenant une part en poids de phase liquide généralement comprise entre 30 et 60%. Généralement, cette phase liquide est de l'eau, celle-ci jouant également le rôle du fluide modérateur dont la nécessité a été rappellée plus haut. Cependant, lorsque le fluide modérateur est de l'eau, la proportion optimale à introduire dans le réacteur est généralement de l'ordre de 15% seulement et, en dépassant cette proportion, on diminue évidemment le rendement thermique de la réaction. Il est donc intéressant de diminuer autant que possible la quantité d'eau utilisé pour le transport du combustible.

Pour réaliser une alimentation en continu du réacteur sous une pression suffisante tout en limitant la teneur en eau de la matière pateuse introduite, on a aussi proposé d'utiliser à cet effet un transporteur à vis alimenté en amont par un mélange de combustible et d'eau et muni d'une filière à l'extrémité aval débouchant dans le réacteur et dans laquelle on forme par extrusion un bouchon de matière comprimée étanche à la pression de l'enceinte et renouvelé en continu au fur et à mesure de son introduction dans le réacteur. On peut utiliser à cet effet une presse d'extrusion comprenant une seule vis hélicoïdale entrainée en rotation à l'intérieur d'un fourreau muni à son extrémité aval d'une partie conique creuse formant convergent et débouchant dans l'enceinte du réacteur de gazéification par un orifice formant filière dans laquelle la matière entrainée par la vis se comprime jusqu'à formation, à la sortie, d'un bouchon étanche à la pression du réacteur.

Avec de telles presses, on peut obtenir les pressions voulues avec des mélanges contenant moins de 40% de liquide. Cependant, on ne peut, en pratique, diminuer la quantité d'eau au-dessous de 20% car une quantité minimale d'eau est nécessaire pour obtenir la montée en pression et la formation d'un bouchon étanche. En effet, dans les presses à une vis, le transport de la matière ne peut se faire que sie celle-ci occupe complètement les filets de façon à exercer un frottement contre la paroi interne du fourreau qui l'empêche de tourner de l'arbre de la vis. On a observé qu'une matière solide, notamment pulvérulente, ne peut être entrainée par une vis et à plus forte raison comprimée que si elle est associée à une phase liquide pour former un mélange pateux. D'un autre côté, si la pression augmente trop, l'eau qui s'échappe de la matière solide forme une pellicule le long du fourreau qui diminue les frottements et par conséquent l'effet d'entrainement vers l'aval de la matière, le débit de l'extrudeuse devenant rapidement nul. Ainsi, un transporteur à une vis ne fonctionne bien et ne permet d'obtenir un bouchon à la pression voulue que pour un mélange d'une phase solide et d'une phase liquide dans des proportions déterminées de façon assez précise. D'autre part, du fait que l'entrainement de la matière se produit essentiellement dans une direction longitudinale, il peut exister dans les filets des zones moins remplies et l'on est amené à réaliser une homogénéisation de la matière à la sortie des filets et avant son entrée dans la filière, c'est à dire, normalement, dans le convergent placé à l'extrémité du fourreau pour diriger les matières vers la filière et dans lequel pénètre la pointe conique de la vis. Celle-ci peut être munie par exemple de pointes qui désagègent la matière pour la ramener à l'état pulvérulent, mais qui sont soumises à une usure importante.

Pour remédier à cet inconvénient, on a proposé d'utiliser pour l'introduction de la matière un transporteur à deux vis alimenté par la matière pulvérulente et par une certaine quantité de liquide, l'effet d'engrènement des vis assurant l'homogénéisation du mélange. Le fourreau débouche à sa sortie dans un conduit assez long pour produire, par freinage de la matière, une compression de celle-ci jusqu'à formation d'un bouchon étanche à la pression règnant à l'intérieur de l'enceinte du générateur. Dans tous les cas, on introduit donc dans cette enceinte un boudin très compact de matières qui doit cependant être désagrégé dès son entrée dans le réacteur. On est donc obligé de maintenir à l'intérieur de ce boudin une certaine quantité de phase liquide qui, à son entrée dans le réacteur, se vaporise sous l'effet de la montée brusque en température et produit ainsi la désagrégation du boudin. Si la quantité de phase liquide n'est pas suffisante on risque cependant que, la désagrégation ne se faisant pas dans de bonnes conditions, des morceaux compacts de dimensions relativement importantes soient introduits dans le réacteur.

Ainsi, dans tous les cas connus jusqu'à présent, lorsque l'on utilise un transporteur à vis, le bouchon continu nécessaire pour assurer l'étanchéité est constitué dans un conduit unique placé à la sortie des vis et il doit contenir une certaine quantité, généralement importante, de phase liquide.

Or, dans le cas d'un réacteur de gazéification industriel, la qualité du mélange combustible alimenté en amont de l'extrudeuse et notamment sa teneur en eau peut varier dans d'assez larges proportions. L'influence de la teneur en eau du combustible est évidemment d'autant plus grande que la teneur en eau totale du mélange est plus faible et c'est aussi une raison pour laquelle on est amené à alimenter le réacteur avec des mélanges relativement humides, contenant au moins de 30 à 40% d'eau.

L'invention a pour objet un nouveau procédé d'alimentation permettant de remédier à ces différents inconvénients et apportant d'autres avantages importants. L'invention a également pour objet un dispositif d'alimentation spécialement adapté à la mise en oeuvre du procédé.

Conformément à l'invention, le bouchon de matière comprimée introduit dans l'enceinte sous pression contient une quantité déterminée pouvant être nulle de phase liquide et, en cas de besoin, on injecte séparément dans le réacteur un débit complémentaire de fluide modérateur pour atteindre la quantité totale nécessaire au bilan thermique optimal du réacteur.

D'autre part, dans un mode de réalisation particulier de l'invention, on alimente le transporteur à vis en un mélange humide contenant une proportion de phase liquide supérieure à la teneur optimale et l'on réalise un essorage de ce mélange au cours de la compression de la matière pour la formation du bouchon étanche, la quantité excédentaire de phase liquide étant évacuée par une zone filtrante ménagée dans le fourreau du transporteur à vis, en amont de la zone de formation du bouchon.

Selon une autre caractéristique importante, on mesure la pression de la matière comprimée dans le bouchon et l'on règle le débit d'alimentation en matière de l'extrudeuse et la vitesse de rotation des vis de façon à maintenir dans le bouchon une pression déterminée correspondant à la teneur en phase liquide désirée, ladite pression étant supérieure à la pression du réacteur.

La constitution d'un bouchon suffisamment étanche à partir d'une matière pouvant être sèche est permise notamment grâce à l'utilisation d'un transporteur à vis identiques entraînées en rotation dans le même sens et comportant au moins deux zones successives à filets de pas différents, respectivement une zone à filets de pas direct de transport vers l'aval suivie d'une zone à filets de pas inversé qui constitue la zone de freinage, le bouchon étanche étant réalisé dans cette zone, à l'intérieur du fourreau. La matière est entraînée partiellement en rotation autour des vis dans la zone de transport et subit de ce fait un tassage progressif avec montée en pression jusqu'à ce que les filets soient complètement remplis dans la zone à pas inversé, l'étanchéité étant assurée dans cette zone par les vis elles-mêmes et par la matières comprimée dans les filets et contre le fourreau. Le passage vers l'aval d'un débit déterminé de matière avec maintien de l'étanchéité est assuré par des ouvertures espacées ménagées dans les filets à pas inversé.

Le dispositif utilisé spécialement pour la mise en oeuvre du procédé selon l'invention est donc constitué par un transporteur à vis comprenant deux vis à filets entraînées rotation dans le même sens, le fourreau étant muni à son extrémité aval de deux orifices de sortie placés respectivement dans l'axe de chacune des vis à la pointe de deux convergents dans lesquels pénètrent les extrémités coniques des deux vis.

Selon un mode de réalisation particulier du procédé, on réalise dans les deux convergents une légère décompression de la matière avec un début de désagrégation et l'on introduit directement la matière dans l'enceinte du générateur par les deux orifices placés chacun dans l'axe d'une vis.

L'invention sera mieux comprise en se référant, à titre d'exemple, à un mode de réalisation particulier représenté sur les dessin annexés.

La figure 1 est une vue en élévation et en coupe axiale du dispositif d'alimentation selon l'invention.

La figure 2 est une vue en coupe transversale selon II-II, figure 1.

La figure 3 est une vue en coupe axiale d'un mode de réalisation plus perfectionné du dispositif d'alimentation selon l'invention.

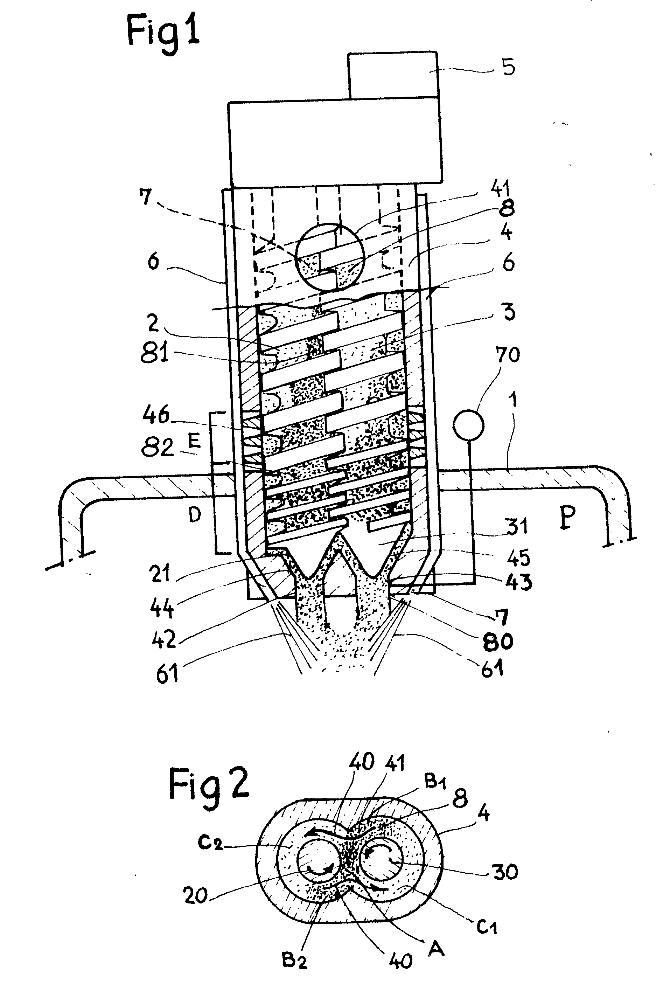

Sur la figure 1, on a représenté schématiquement l'enceinte 1 du réacteur de gazéification à la partie supérieure de laquelle est placé le dispositif d'alimentation.

Celui-ci est constitué d'un transporteur comportant deux vis parallèles 2 et 3 engrènant l'une dans l'autre et placées à l'intérieur d'un fourreau 4 qui les enveloppe. De préférence, les deux vis sont identiques et entraînées en rotation dans le même sens par un moteur 5.

La rotation des deux vis détermine l'entrainement de l'amont à l'aval (c'est à dire, dans l'exemple représenté, de haut en bas) de la matière 8 introduite par un orifice d'entrée 51 auquel est relié un dispositif d'alimentation non représenté, par exemple une conduite alimentée par une pompe à boue.

L'extrémité aval du fourreau 4 débouche à l'intérieur de l'enceinte 1 et est munie, de préférence, de deux orifices de sortie 42, 43 placés chacun dans l'axe d'une vis 2, 3, au débouché d'une partie conique 44, 45 formant convergent et à l'intérieur de laquelle pénètre une pointe 21, 31 ménagée à l'extrémité de chaque vis 2, 3.

Le long du fourreau sont ménagés des conduits 6 d'alimentation en oxygène qui débouchent dans l'enceinte 1 et sont dirigés vers les boudins de matière 80 sortant des deux orifices 42, 43. On a constaté que l'utilisation d'une extrudeuse à plusieurs vis entrainées en rotation dans le même sens et débouchant par plusieurs orifices dans l'enceinte 1 permet d'alimenter celle-ci en un mélange solide en poudre dont la teneur en phase liquide peut être reduite au minimum et même, selon la nature du combustible, être nulle.

En effet, dans une machine à deux vis, comme on l'a représenté sur la figure 2, la matière 8 est entrainée par les filets des deux vis autour de ceux-ci en suivant les parois du fourreau 4, selon les flèches 40 de la figure 2. Bien que constituée d'une poudre de granulométrie fine, la matière peut ainsi être entrainée vers l'aval même quand les filets ne sont pas complètement remplis. A l'intérieur de chaque filet, la matière tourne autour des arbres 20 et 30 et doit vaincre une résistance quand elle arrive dans la zone d'engrènement A où l'espace entre les filets de la vis 3 est occupé par un filet de la vis 2 et réciproquement dans la partie B, de chaque filet de la vis 3. Il en résulte, en amont de la zone d'engrènement A une accumulation de matière B1 qui se comprime puis se détend lorsqu'elle passe dans la partie $C_2$ du filet correspondant de la vis 2. Elle tourne alors autour de l'arbre 20 de la vis 2 et de nouveau se comprime dans la partie $B_2$ en amont de la zone d'engrènement A avant de passer dans la partie $C_1$ du filet suivant de la vis 3.

Au fur et à mesure de l'avancement dans les vis, la matière passe ainsi, d'un filet à l'autre, par une succession de phases de compression B et de détente C qui favorisent le tassement et éventuellement un effet de trituration des particules solides. L'importance des zones comprimées B augmente à mesure de l'avancement vers l'aval et, lorsqu'on arrive à proximité de la sortie de l'extrudeuse, les filets sont entièrement remplis.

Ainsi, à la fin de son transport dans les vis, et notamment si l'on a freiné la matière par des filets à pas resserré, la matière est parfaitement répartie et tassée tout autour des vis et la zone étanche D couvre non seulement la filière de sortie et le convergent mais aussi les deux ou trois derniers filets des vis qui sont complètement remplis de matière comprimée. Une étanchéité suffisante peut ainsi être obtenue même avec une matière relativement sèche. Il faut d'ailleurs noter que la nature carbonée du combustible favorise l'obtention d'une étanchéité suffisante et le transport d'une matière sèche.

D'autre part, on a placé un orifice de sortie 42, 43 dans l'axe de chaque vis et par conséquent, pour un débit d'alimentation donné, chaque orifice de sortie 42, 43 a une section plus réduite que celle de l'orifice unique d'une mono-vis et l'étanchéité s'y maintient plus facilement.

Ainsi, on sort par les orifices 42, 43 deux boudins étanches de matière 80 qui, bien que fortement comprimés restent friables en raison du faible degré d'humidité et se désagrègent facilement dès que la pression ne s'exerce plus, à la sortie des orifices 42, 43 et en particulier sous l'action de jets de gaz 61 alimentés par les conduites 6.

Il est ainsi possible d'introduire dans le réacteur de gazéification une matière dont le taux d'humidité est compris, par exemple, entre 5 et 15% mais peut être encore réduit en cas de besoin. Il en résulte un avantage très important dans un réacteur de gazéification car, précisément, lorsque le fluide modérateur est de l'eau, la quantité optimale pour un fonctionnement satisfaisant du réacteur est de l'ordre de 15% de liquide par rapport au poids total de matière introduite. Ainsi, on n'introduit pratiquement pas d'eau excédentaire et l'on améliore sensiblement le bilan thermique du réacteur.

Un tel transporteur à deux vis permet donc d'introduire avec la matière combustible une quantité minimale d'eau, éventuellement inférieure à la quantité optimale et à injecter séparément dans le réacteur un débit complémentaire d'eau ou de fluide modérateur de façon à maintenir à tout moment dans le réacteur la quantité de modérateur juste nécessaire au bon fonctionnement de la réaction.

Ainsi, grâce aux dispositions selon l'invention, il est possible d'ajuster en permanence à la proportion optimale la quantité d'eau ou de fluide modérateur introduit dans le réacteur.

D'ailleurs, la possibilité d'introduire le combustible dans le réacteur avec une teneur minimale de liquide permet également d'utiliser un fluide modérateur différent du liquide introduit avec le combustible.

Par exemple le fluide modérateur peut être évaporé et/ou préchauffé pour être introduit sous forme de gaz chaud sous pression, éventuellement dans les jets (61) de désagrégation du boudin de matière solide.

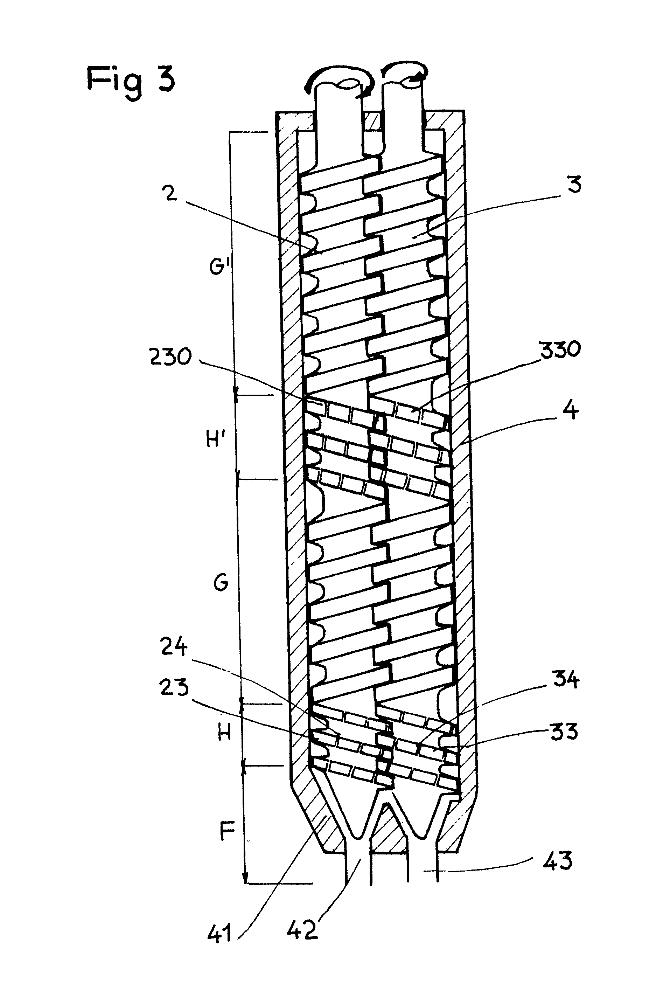

La réalisation du bouchon de matière comprimée à l'intérieur du fourreau 4 s'effectue dans des conditions encore meilleures si l'on utilise une machine à plusieurs vis du type représenté sur la figure 3.

En effet, dans ce cas, la zone de transport G munie de filets à pas directs d'entrainement vers l'aval est suivie d'une zone H comprenant deux ou trois filets à pas inversés qui produisent donc un freinage plus efficace de la matière et par conséquent une montée en pression importante. Pour permettre le passage vers l'aval d'un certain débit de matière, les filets 23 sont munis de fenêtres 24 constituées par des ouvertures espacées, ménagées radialement entre l'arbre de la vis et la périphérie du filet. Les vis, qui sont identiques et entrainées en rotation dans le même sens, sont calées de telle sorte que les ouvertures 24 et 34 des filets placés côte à côte sur les vis 2 et 3 viennent en coïncidence simultanément dans la zone d'interpénétration A. Ainsi, la matière comprimée à l'intérieur des filets 23 et 33 est poussée par la matière entrainée vers l'aval dans les zones de transport G et peut passer vers l'aval par cette fenêtre centrale qui s'ouvre et se ferme à intervalles périodiques, le passage d'un filet au suivant d'une même vis pouvant également se faire par les autres fenêtres 24. On contrôle ainsi le passage vers l'aval d'un certain débit de matière tout en maintenant l'étanchéité puisque la zone H est entièrement remplie de matière.

Dans cette zone, l'étanchéité est donc effectuée par les vis elles-mêmes et par la matière qui remplit complètement les filets et est appliquée sous une forte pression contre les parois du fourreau de façon à remplir le léger interstice existant entre la périphérie des filets et la paroi interne du fourreau 4. La pression s'exerce donc sur toute la surface interne du fourreau et l'étanchéité ne doit être assurée que sur le périmètre des vis, la zone d'interpénétration A parfaitement remplie du fait que les vis sont entrainées en rotation dans le même sens.

Par ailleurs, comme on l'a représenté sur la figure 3, on peut également munir les vis de plusieurs paires succesives de zones associées, respectivement de transport G et de freinage H de façon l'étanchéité puisse être assurée dans les zones de freinage H et H'.

Un avantage particulier de cette disposition, vient du fait que, l'étanchéité étant assurée suffisamment dans les zones à pas inversés, il est possible de permettre à la matière de se décomprimer légèrement lorsqu'elle passe dans les deux convergents 45 et les deux filières 42 et 43. Dans les deux convergents, la matière sortant des filets et légèrement décomprimée peut être entrainée partiellement autour des vis et cette rotation, associée au passage dans les convergents et les filières, peut produire un début de désagrégation du bouchon étanche.

Ainsi, grâce à des dispositifs d'alimentation perfectionnés, on peut introduire dans le réacteur une matière pratiquement sèche qui s'effrite facilement sous l'action des jets 61.

Mais l'utilisation comme dispositif d'alimentation d'une extrudeuse à deux vis présente d'autres avantages dans le cas d'un réacteur de gazéification. En effet on a constaté que le fonctionnement du transpoteur à deux vis et notamment le débit de matière obtenu à la sortie et la pression atteinte dépendaient assez peu de la composition du mélange et notamment de la proportion de matière sèche qui peut aller par exemple de 5 à 60% alors qu'une extrudeuse à une vis ne fonctionne de façon satisfaisante que pour une composition définie dans des proportions assez précises. De ce fait, le fonctionnement du dispositif d'alimentation est moins tributaire des variations de composition et notamment de teneur en eau du charbon. C'est aussi l'une des raisons pour lesquelles on peut utiliser un mélange beaucoup plus sec.

L'invention donne donc l'avantage important de permettre l'utilisation dans le réacteur de gazéification de charbons de toute nature.

En effet, comme on l'a indiqué, pour obtenir un rendement intéressant du réacteur de gazéification, il est préférable que la matière combustible introduite dans celui-ci ait une teneur en eau assez limitée et de préférence inférieure à 15%. Or, pour la détermination de cette teneur en eau, on ne doit tenir compte que de la partie combustible de la matière solider introduite. Par conséquent, si la matière solide contient une certaine proportion de cendres incombustibles ou d'eau interstitielle, comme dans le cas des lignites le rapport de la proportion de matière combustible utile, à la proportion d'eau, est encore diminué.

Si, par exemple, le combustible introduit dans le réacteur est constitué d'un charbon contenant 30% de cendres incombustibles, l'utilisation d'un transporteur à plusieurs vis permet de réaliser et d'introduiere dans le réacteur un bouchon étanche contenant seulement une proportion d'eau interstitielle de 10% qui correspond à la quantité de fluide modérateur nécessaire, compte tenu de la proportion de charbon obtenu dans le mélange.

Si le combustible est une lignite contenant, par exemple 20% d'eau de constitution, cette quantité est déjà suffisante pour la modération de la réaction et, grâce à l'utilisation d'une machine d'introduction à plusieurs vis, on évite de rajouter de l'eau pour le transport de la matière, celle-ci étant introduite à sec dans le réacteur.

Ainsi, grâce à la possibilité, selon l'invention, d'alimenter le réacteur en un mélange combustible dont la teneur en phase liquide peut être réduite au minimum et même pratiquement nulle, on peut ajouter à la matière solide la quantité de liquide, et notamment d'eau, juste nécessaire au bon fonctionnement de la réaction en fonction de la quantité utile de matière combustible introduite, en tenant compte de la proportion de cendres et d'eau liée chimiquement.

D'autre part, on a observé qu'il existe une relation entre la teneur en eau du mélange et la pression qui est obtenue dans les convergents 44, 45 et dans les orifices de sortie 42, 43 des vis. Par conséquent, selon le débit de matière que l'on veut obtenir à la sortie du dispositif, on peut régler, en fonction l'un de l'autre, le débit d'alimentation en mélange à l'orifice d'entrée 41 et la vitesse de rotation des vis de façon à maintenir la pression à l'intérieur du bouchon étanche à une valeur sensiblement constante correspondant à la teneur en eau du mélange à la sortie 42, 43 du fourreau.

Pour être sûr d'assurer une étanchéité suffisante, on pourra donc placer dans le fourreau 4, dans l'un des orifices de sortie 42, 43 ou dans un convergent, un capteur de pression 7, relié à un indicateur 70 qui permettra de vérifier à tout moment que la pression à la sortie de l'extrudeuse reste supérieure à la pression P à l'intérieur de l'enceinte 1, avec le coefficient de sécurité voulu. Si la pression varie, on la ramènera à la valeur voulue en modifiant le débit d'alimentation à l'entrée 41 de l'extrudeuse pour régler le taux de remplissage des vis et/ou en jouant sur la vitesse de rotation des vis. Ce réglage se fait assez facilement car, dans une extrudeuse à deux vis, l'action sur le taux de compression est plus rapide que dans une extrudeuse à une vis et, pour une teneur en eau relativement constante la pression atteinte à la sortie reste assez stable.

En outre, l'utilisation d'un transporteur à plusieurs vis présente l'avantage de permettre une variation du débit des matières à la sortie du fourreau 4 dans une proportion assez large sans modifier sensiblement la pression dans les filières 42, 43. Ainsi, tout en assurant l'étanchéité voulue, on pourra faire varier le débit en fonction des conditions de fonctionnement du réacteur, de réglage pouvant donc être plus souple que dans le cas où le réacteur est alimenté par une extrudeuse à une seule sortie.

Pour obtenir une teneur en eau faible et même nulle dans le bouchon de matière comprimée dans le réacteur, on peut évidemment ajuster à la valeur voulue les proportions de phase liquide et de phase solide dans le mélange introduit par l'orifice d'entrée 41 du transporteur à vis. D'ailleurs, dans les installations connues jusqu'à présent, ces proportions n'étaient pas modifiées lors du transport et de la compression de la matière avant son entrée dans le réacteur.

Or, selon une caractéristique supplémentaire et importante de l'invention, il est possible, grâce à l'utilisation d'un transporteur à plusieurs vis, de réaliser un essorage de la matière combustible au cours de sa compression et, par conséquent, d'abaisser la teneur en eau de la matière introduite à la valeur souhaitée même lorsque le mélange alimenté par l'orifice d'entrée 41 contient une proportion importante de liquide.

A cet effet, on ménage sur le fourreau 4 des parties filtrantes 46 dans la zone E qui précède la zone de freinage et de compression D où les filets sont complètement remplis; on constante alors une séparation de la phase solide qui est entrainée vers l'aval et de la phase liquide qui peut remonter vers l'amont et s'échapper par les zones filtrantes. En effet, comme on l'a indiqué, les filets ne sont pas complètement remplis au débit des vis, et la compression de la matière solide entrainée autour des vis dans la partie B de chaque filet avant la zone d'engrènement, provoque l'expulsion d'une certaine quantité d'eau qui reste dans la zone détendue G du filet. Comme les zones détendues C des filets d'une même vis sont placées dans le même secteur angulaire de la vis, la phase liquide peut remonter d'un filet à l'autre en passant dans le jeu existant nécessairement entre la vis et le fourreau, jusqu'à la zone filtrante E où elle est évacuée.

D'autre part, on a indiqué que, pour un débit déterminé de matière à la sortie de l'extrudeuse, la pression dans les orifices de sortie 42 et 43 est liée à la teneur en eau et que si l'on règle, comme on l'a dit plus haut, le débit d'alimentation et la vitesse de rotation des vis pour maintenir la pression constante dans les orifices 42 et 43, la teneur en eau de la matière sortant de l'extrudeuse reste également constante, la quantité excédentaire s'échappant par la partie filtrante 46 du fourreau.

Par conséquent, on peut, dans ce cas, alimenter l'extrudeuse par un mélange contenant une forte proportion d'eau, par exemple une suspension à 40% de matière sèche, et malgré tout obtenir à la sortie de l'extrudeuse une matière essorée jusqu'à une teneur en eau relativement constante et qui peut être inférieure à 15%. Or, il est très important pour un bon fonctionnement du réacteur de contrôler la teneur en eau du combustible introduit dans l'enceinte 1 quelles que soient les variations de composition de la suspension arrivant par la conduite d'alimentation dans l'orifice d'entrée 41.

Enfin, l'utilisation, dans le mode de réalisation de la figure 3, de filets à pas inversé munis de fenêtres pour réaliser le bouchon étanche à l'intérieur du fourreau donne la possibilité d'alimenter le transporteur à vis par une matière constituée de particules de granulométrie étendue, par exemple pouvant aller jusq'à plusieurs millimètres. Dans ce cas, en effet, le tassage effectué dans la partie de la zone de transport permet d'obtenir un bouchon étanche même avec des morceaux de dimension variées. En outre, le passage dans les zones à pas inversé réalise une fragmentation de la matière, les fenêtres ne laissant passer vers l'aval que les particules ne dépassant pas une dimension donnée. Cette fragmentation peut d'ailleurs être échelonnée sur plusieurs zone de freinage espacées, comme dans le cas de la figure 3, la largeur des fenêtres pouvant diminuer de l'amont à l'aval.

Bien entendu, l'invention n'est pas limitée au mode de réalisation qui vient d'être décrit, et qui pourrait fait l'objet de variantes.

C'est ainsi que l'on pourrait, en cas de besoin, utiliser plus de deux vis d'alimentation.

D'un autre côté si, comme on l'a indiqué plus haut, il est préférable de placer un orifice 42, 43 en face de chaque vis 2, 3, on pourrait également réaliser un seul bouchon comprimé dans un orifice de sortie unique placé au débouché d'un convergent englobant les extrémités des deux vis.

D'autre part, on a représenté une extrudeuse à axe vertical, mais on pourrait aussi placer les axes des vis dans un plan horizontal notamment pour faciliter l'évacuation de l'eau dans le cas où l'on réalise un essorage par des parties filtrantes du fourreau.

## Revendications

1. Procédé d'alimentation en matière combustible, d'un générateur de gaz constitué d'une enceinte (1) maintenue sous pression, dans laquelle sont introduits un mélange contenant un combustible carboné solide réduit en particules, un fluide comburant et un fluide modérateur, le mélange combustible étant introduit dans l'enceinte du réacteur au moyen d'un transporteur à vis comportant au moins deux vis parallèles entraînées en rotation à l'intérieur d'un fourreau (4), le mélange combustible (8) introduit à une extrémité amont du fourreau (4) par un orifice d'entrée (41) étant entraîné vers l'aval par la rotation des vis puis passant dans une zone de freinage qui détermine une compression de la matière et la formation d'un bouchon (80) de matière comprimée étanche à la pression régnant dans l'enceinte (1) du générateur et renouvelé en continu à mesure de son introduction dans celui-ci, caractérisé par le fait que le bouchon (80) de matière comprimée introduit dans l'enceinte sous pression contient une quantité déterminée pouvant être nulle de phase liquide et que, en cas de besoin, on injecte séparément dans le réacteur un débit complémentaire de fluide modérateur pour atteindre la quantité totale nécessaire au bilan thermique optimal du réacteur.

2. Procédé d'alimentation selon la revendication 1, caractérisé par le fait que l'on alimente le transporteur à vis en un mélange contenant une certaine proportion de phase liquide et que l'on réalise un essorage de ce mélange au cours de la compression de la matière pour la formation d'un bouchon étanche (80), contenant une proportion déterminée de phase liquide, la quantité excédentaire étant évacuée par une zone filtrante (46) ménagée dans le fourreau (4) en amont de la zone (D) de formation du bouchon.

3. Procédé d'alimentation selon l'une des revendications précédentes, caractérisé par le fait que l'on mesure la pression de la matière comprimée dans le bouchon (80) et que l'on règle le débit d'alimentation en matière de l'extrudeuse (4) et la vitesse de rotation des vis (2, 3) de façon à maintenir dans le bouchon (80) une pression déterminée correspondant à la teneur en phase liquide désirée, ladite pression étant supérieure à la pression dans l'enceinte (1) du réacteur.

4. Procédé d'alimentation d'un générateur de gaz selon la revendication 1, caractérisé par le fait que, grâce à l'utilisation d'un transporteur à vis identiques entraînées en rotation dans le même sens et comportant au moins une paire de zones à filets de pas différents, respectivement une zone à filets de pas direct de transport vers l'aval suivie d'une zone à filets de pas inversé constituant la zone de freinage, on réalise le bouchon étanche (80) dans cette zone, à l'intérieur du fourreau (4), la matière étant entraînée partiellement en rotation autour des vis dans la zone de transport et subissant un tassage progressif avec montée en pression jusqu'à ce que les filets soient complètement remplis dans la zone à pas inversé dans laquelle l'étanchéité est assurée par les vis elles-mêmes et par la matière comprimée dans les filets et contre le fourreau, le passage vers l'aval d'un débit déterminé de matière avec maintien de l'étanchéité étant assuré par des ouvertures espacées ménagées dans les filets à pas inversé.

5. Procédé d'alimentation selon la revendication 4, caractérisé par le fait que, chaque vis étant munie, immédiatement en aval de la zone à pas inversé, d'une pointe pénétrant dans un convergent, on réalise dans les deux convergents une légère décompression de la matière avec un début de désagrégation et l'on introduit directement la matière dans l'enceinte (1) du générateur par des orifices placés chacun à la pointe d'un convergent dans l'axe de la vis.

6. Procédé d'alimentation selon la revendication 4, caractérisé par le fait que la matière introduite à l'entrée (41) du fourreau (4) étant constituée de particules de granulométries différentes, on réalise une fragmentation des particules de matière au cours du tassage et de la compression à l'intérieur du fourreau jusqu'à un degré de finesse déterminé par la dimension des ouvertures de la zone à pas inversé.

7. Dispositif d'alimentation en matière combustible d'un générateur de gaz, constitué par un transporteur à plusieurs vis comportant au moins deux vis (2 et 3) parallèles entraînées en rotation à l'intérieur d'un fourreau (4), la matière introduite par un orifice d'entrée (41) du fourreau (4) étant entraînée vers l'aval par les vis et passant dans une zone de freinage (D) où se forme un bouchon (80) de matière comprimée étanche à la pression régnant dans le générateur et renouvelé en continu à mesure de son introduction dans celui-ci, caractérisé par le fait que les deux vis ont des filets indentiques et sont entraînées en rotation dans le même sens et que le fourreau (4) est muni à son extrémité aval de deux orifices de sortie (42, 43) placés respectivement dans l'axe de chacune des vis (2, 3) à la pointe de deux convergents (44, 45) dans lesquels pénètrent les extrémités coniques (21, 31) des deux vis (2, 3).

8. Dispositif d'alimentation selon la revendication 7, caractérisé par le fait que le fourreau allongé (4) est muni en amont de la zone de compression (D) d'une zone d'essorage (E) comportant des parties filtrantes (46) pour l'évacuation de la quantité excédentaire de phase liquide.

9. Dispositif d'alimentation selon la revendication 7, caractérisé par le fait que les deux vis (2, 3) comportent, de l'amont à l'aval, au moins deux zones à filets de pas différents, respectivement une zone à filets de pas direct de transport vers l'aval et une zone à filets de pas inversé de freinage de la matière pour la constitution dans les filets du bouchon (80) de matière comprimée, les filets à pas inversés étant munis d'ouvertures espacées s'étendant radialement entre l'arbre et la périphérie de la vis, pour le passage vers l'aval d'un débit déterminé de matière avec maintien de l'etanchéité.

## Patentansprüche

1. Verfahren zur Brennstoffversorgung eines Gasgenerators, der aus einer unter Druck gehaltenen Zelle (1) besteht, in welche eine Mischung, die einen festen, kohlenstoffhaltigen Brennstoff in Teilchenform enthält, ein Brennfluid und ein Moderatorfluid eingebracht werden, wobei die Brennstoffmischung in die Reaktorzelle mittels eines Schraubenförderers eingebracht wird, der zumindest zwei parallele, im Inneren einer Hülse (4) in Rotation versetzte Schrauben bzw. Schnecken umfaßt, und wobei die Brennstoffmischung (8), welche an einem stromaufwärts gelegenenen Ende der Hülse (4) durch eine Eintrittsöffnung (41) eingebracht wird, durch die Rotation der Schrauben stromabwärts befördert wird und danach eine Bremszone durchläuft, die eine Kompression des Stoffes sowie die Bildung eines Pfropfens (80) aus dem bei dem in der Zelle (1) des Generators herrschenden Druck dicht zusammengepreßten Stoff bewirkt und kontinuierlich im Ausmaß ihrer Einbringung in diesen durch neue ersetzt wird, dadurch gekennzeichnet, daß der Pfropfen (80) aus komprimiertem Stoff, der unter Druck in die Zelle eingeführt wird, eine bestimmte Menge, die auch Null sein kann, flüssiger Phase enthält, und daß man im Bedarfsfall in den Reaktor getrennt eine ergänzende Menge Moderatorfluid einspritzt, um die für die optimale Wärmebilanz des Reaktors notwendige Gesamtmenge zu erzielen.

2. Verfahren zur Versorgung gemäß Anspruch 1, dadurch gekennzeichnet, daß man den Schraubenförderer mit einer Mischung speist, welche einen gewissen Anteil flüssiger Phase enthält, und daß man diese Mischung im Laufe der Kompression des Stoffes zwecks Bildung eines dichten Pfropfens (80), der einen bestimmten Anteil flüssige Phase enthält, trocknet, wobei die überschüssige Menge durch eine Filterzone (46), die in der Hülse (4) stromabwärts der Zone (D) der Pfropfenbildung angeordnet ist, entfernt wird.

3. Verfahren zur Versorgung nach einem der bisherigen Ansprüche, dadurch gekennzeichnet, daß man den Druck des komprimierten Stoffes im Pfropfen (80) mißt und die Menge des dem Extruder (4) zugeführten Stoffes und die Rotationsgeschwindigkeit der Schrauben (2, 3) so regelt, daß man im Pfropfen (80) einen bestimmten Druck aufrecht erhält, der dem gewünschten Gehalt an flüssiger Phase entspricht, wobei dieser Druck über dem Druck in der Zelle (1) des Reaktors liegt.

4. Verfahren zur Versorgung eines Gasgenerators gemäß Anspruch 1, dadurch gekennzeichnet, daß man mit der Verwendung eines Förderers mit identen Schrauben bzw. Schnecken, die in gleichsinnige Rotation versetzt werden und zumindest ein Paar Gang- bzw. Gewindezonen bzw. -abschnitte mit unterschiedlichem(r) Gewinde bzw. Steigerung bzw. eine Gewindezone mit einer direkten Steigung zum Vorschub stromabwärts, gefolgt von einer Gewindezone mit einer entgegengesetzten Steigung, welche die Bremszone bildet, aufweisen, den dichten Pfropfen (80) in dieser Zone im Inneren der Hülse (4) herstellt, wobei der Stoff teilweise in Rotation um die Schrauben in der Vorschubzone versetzt wird und mit dem Ansteigen des Drucks ein progressives Zusammendrücken erfährt, bis die Gewinde in der Zone mit entgegengesetzter Steigung vollständig gefüllt sind, in welcher die Dichtheit durch die Schrauben selbst und durch den in den Gewindegängen und gegen die Hülse komprimierten Stoff gewährleistet ist, während der Vorschub in Stromabwärtsrichtung einer bestimmten Menge Stoff die Aufrechterhaltung der Dichtheit durch in Abständen angeordnete Öffnungen, die in den Gewinden mit der entgegengesetzten Steigung ausgebildet sind, gewährleistet ist.

5. Verfahren zur Versorgung nach Anspruch 4, dadurch gekennzeichnet, daß jede Schraube bzw. Schnecke unmittelbar stromabwärts der Zone mit der entgegengesetzten Gewindesteigung mit einer Spitze versehen ist, welche in einen konvergierenden Abschnitt vorsteht, daß man in den beiden konvergierenden Abschnitten eine geringfügige Dekompression des Stoffes mit einem beginnenden Zerfall realisiert und daß man den Stoff direkt in die Zelle (1) des Generators durch Öffnungen einführt, die jeweils bei der Spitze eines konvergierenden Abschnittes in der Schraubenachse liegen.

6. Verfahren zur Versorgung nach Anspruch 4, dadurch gekennzeichnet, daß der am Eingang (41) der Hülse (4) eingeführte Stoff aus Teilchen verschiedener Korngrößen bzw. Körnung besteht und daß man eine Fragmentierung der Stoffteilchen im Zuge des Zusammendrückens und der Kompression im Inneren der Hülse vornimmt, bis zu einem Feinheitsgrad, der durch die Dimension der Öffnungen in der Zone mit dem entgegengesetzten Schraubengang festgelegt wird.

7. Vorrichtung zur Brennstoffversorgung eines Gasgenerators, bestehend aus einem Förderer mit mehreren Schrauben bzw. Schnecken, der mindestens zwei parallele Schrauben (2 und 3) umfaßt, die im Inneren einer Hülse (4) in Rotation versetzt sind, wobei der durch eine Eintrittsöffnung (41) der Hülse (4) eingeführte Stoff, der von den Schrauben stromabwärts befördert wird und in eine Bremszone (D) gelangt, wo sich ein Propfen (80) aus dem Stoff bildet, der bei dem im Generator herrschenden Druck dicht zusammengepreßt wird, und kontinuierlich im Ausmaß seines Einbringens in diesen durch neue ersetzt wird, dadurch gekennzeichnet, daß die beiden Schrauben idente Gewinde aufweisen und in gleichsinnige Rotation versetzt sind und daß die Hülse (4) an ihrem stromabwärts gelegenen Ende mit zwei Austrittsöffnungen (42, 43) versehen ist, die jeweils in der Achse jeder der Schrauben (2, 3) bei der Spitze zweier konvergierender Abschnitte (44, 45) angeordnet sind, in welche die konischen Enden (21, 31) der beiden Schrauben (2, 3) hineinragen bzw. vorspringen.

8. Vorrichtung zur Versorgung nach Anspruch 7, dadurch gekennzeichnet, daß die langgestreckte Hülse (4) stromaufwärts der Kompressionszone (D) mit einer Trocknungs- bzw. Absaugzone (E) ausgestattet ist, die Filterteile bzw. -abschnitte (46) zum Entfernen der überschüssigen Menge der flüssigen Phase umfaßt.

9. Vorrichtung zur Versorgung nach Anspruch 7, dadurch gekennzeichnet, daß die beiden Schrauben (2, 3) vom oberen bis zum unteren Ende zumindest zwei Zonen mit verschiedener Gewindesteigung bzw. eine Gewindezone mit einer direkten Steigung zum Vorschub in Stromabwärtsrichtung und eine Gewindezone mit entgegengesetzter Steigung zur Bremsung des Stoffes zwecks Bildung eines Pfropfens (80) des komprimierten Stoffes in den Gewindegängen aufweisen, wobei die Gewinde mit entgegengesetzter Steigung in Abständen angeordnete Öffnungen aufweisen, welche sich radial zwischen der Welle und der Peripherie bzw. dem Umfang der Schraube zum Durchsatz einer bestimmten Menge des Stoffes stromabwärts bei Aufrechterhaltung der Dichtheit befinden.

## Claims

1. Process for feeding combustible material to a gas generator consisting of an enclosure (1) maintained under pressure, into which are introduced a mixture containing a solid carbonaceous fuel reduced into particles, a combustive fluid and a moderator fluid, the combustible mixture being introduced into the enclosure of the reactor by means of a screw conveyor comprising at least two parallel screws driven in rotation inside a sleeve (4), the combustible mixture (8) introduced at an upsteam end of the sleeve (4) through an entry opening (41) being driven downstream by the rotation of the screws, then passing through a braking zone which determines a compression of the material and the formation of a plug (80) of compressed material which is impervious at the pressure predominating in the enclosure (1) of the generator and is continuously renewed as it enters the latter, characterised in that the plug (80) of compressed material entering the enclosure under pressure contains a specified quantity, which may be zero, of liquid phase and that, if need be, an additional flow of moderator fluid is injected separately into the reactor to attain the total quantity necessary for the optimum heat balance of the reactor.

2. Feeding process according to Claim 1, characterised in that the screw conveyor is fed with a mixture containing a certain proportion of liquid phase and that drying of this mixture is produced during the compression of the material to form an impervious plug (80) containing a specified proportion of liquid phase, the excess quantity being removed by a filtering zone (46) arranged in the sleeve (4) upstream of the plug forming zone (D).

3. Feeding process according to either of the preceding claims, characterised in that the pressure of the compressed material in the plug (80) is measured and that the flow of supply of material to the extruder (4) and the speed of rotation of the screws (2, 3) are regulated so as to maintain in the plug (80) a specified pressure corresponding to the desired content of liquid phase, the said pressure being higher than the pressure in the reactor enclosure (1).

4. Process for feeding a gas generator according to claim 1, characterised in that, by virtue of the use of a conveyor with identical screws driven in rotation in the same direction and comprising at least one pair of zones with flights of different pitches, respectively a zone with flights of straightforward pitch for downstream conveyance followed by a zone with flights of reversed pitch forming the braking zone, the impervious plug (80) is produced in this zone, inside the sleeve (4), the material being partly driven in rotation around the screws in the conveying zone and undergoing a gradual compaction with increase in pressure until the flights are completely filled in the zone with reversed pitch in which the imperviousness is provided by the screws themselves and by the material compressed in the flights and against the sleeve, the downstream passage of a specified flow of material with maintenance of the leaktightness being ensured by spaced opening provided in the flights with reversed pitch.

5. Feeding process according to claim 4, characterised in that each screw being equipped, immediately downstream of the reversed pitch zone, with a point entering into a convergence, a slight decompression of the material is produced in the two convergences with a beginning of disintegration and the material is introduced directly into the enclosure (1) of the generator through openings each of which is placed at the point of a convergence in the axis of the screw.

6. Feeding process according to claim 4, characterised in that the material introduced at the entry (41) of the sleeve (4) consisting of particles of different particle sizes, a fragmentation of the particles of material is produced during the compaction and compression inside the sleeve to a degree of fineness determined by the size of the opening in the reversed pitch zone.

7. Device for feeding combustible material to a gas generator, consisting of a conveyor with several screws comprising at least two parallel screws (2 and 3) driven in rotation inside a sleeve (4), the material introduced through an entry opening (41) of the sleeve (4) being driven downwards by the screws and passing into a braking zone (D) where a plug (80) is formed of compressed material impervious at the pressure predominating in the generator and continuously renewed as it enters the latter, characterised in that the two screws have identical flights and are driven in rotation in the same direction and that the sleeve (4) is equipped at its downstream end with two outlet openings (42, 43) placed respectively in the axis of each of the screws (2, 3) at the point of two convergences (44, 45) into which enter the conical ends (21, 31) of the two screws (2, 3).

8. Feeding device according to claim 7, characterised in that the elongated sleeve (4) is equipped upstream of the compression zone (D) with a drying zone (E) comprising filtering parts (46) for the removal of the excess quantity of liquid phase.

9. Feeding device according to claim 7, characterised in that the two screws (2, 3) comprise, from upstream in the downstream direction, at least two zones with flights of different pitches, respectively a zone with flights of straightforward pitch for conveyance downstream and a zone with flights of reversed pitch for braking the material for the forming of the plug (80) of compressed material in the flights, the flights of reversed pitches being equipped with spaced openings extending radially between the shaft and the periphery of the screw, for the downstream passage of a specified flow of material with maintenance of the imperviousness.

# Fig 1

# Fig 2

# Fig 3